# EUROPÄISCHE PATENTANMELDUNG

(11) **EP 0 743 266 A1**
(43) Veröffentlichungstag der Anmeldung: **20.11.1996**
(21) Anmeldenummer: 95107600.9
(22) Anmeldetag: 18.05.1995
(51) Int. Cl.: B65G 1/02, A47B 57/52

(54) **Kragarm-Regalsystem**

(71) Anmelder: Paul, Dieter, Dipl.-Ing., D-30890 Barsinghausen (DE)
(72) Erfinder: Paul, Dieter, Dipl.-Ing., D-30890 Barsinghausen (DE)

(57) **Zusammenfassung**

Ein Schwerlast-Kragarm-Steckregal-System besteht aus Doppel-T-Trägerprofil-Standsäulen mit einseitig, oder beidseitig angeschweißtem Lochraster-Profil, angeschweißten einseitigen, oder doppelseitigen Fußbalken, mit den Standsäulen verschraubten Horizontal- und Vertikal-Verbindern und mittels Sicherheits-Stechriegel montierten Kragarmen.

Die Kragarme können im Raster nach oben, oder unten montiert werden.

## Beschreibung

Die Erfindung bezieht sich auf Regale, die zur Lagerung von schweren Lagergütern, wie Kanthölzer, Spanplatten, Blechpakete, Stabmaterial, usw eingesetzt werden.

Schwerlast-Kragarm-Steckregale kommen häufig zum Einsatz bei der Zwischenlagerung der vorgenannten Lagergüter. Sie werden entweder in Lagerhallen, oder versehen mit einem Dach auch als Außenlager eingesetzt.

Gegenstand der vorliegenden Erfindung ist das sowohl einseitige, als auch doppelseitige Stecksystem, bestehend aus einer Steckriegel-Kragarmaufhängung, im Raster von 75 mm verstellbaren Kragarmen und einem Sicherheits-Steckriegel. Die Kragarmständer bestehen aus einem warmgewalzten Doppel-T-Profil, kombiniert mit einem vorgeschweißten Langloch-C-Profil, die mit einem Fußbalken, ebenfalls bestehend aus einem Doppel-T-Profil verschweißt sind. Die einzelnen Kragarmständer werden durch verschraubte Horizontal- und Vertikal-Verbinder zu einem Regalblock verbunden.

Ein Vorteil eines solchen Regales ist seine hohe Tragfähigkeit, die bis zu 2.670 Kg/Kragarm, sowie 9.740 Kg /Regalsäulenseite je nach Profilgröße betragen kann. Ein weiterer Vorteil ist das Sicherheits-Stecksystem, mit dem die Kragarme mit dem Regalständer verbunden sind. Der abgesetzte Steckriegel verhindert nach dem Einhängen des Kragarmes ein seitliches Herauswandern desselben. Ein wesentliches Merkmal dieser Kragarm-Schnellverbindung ist, da keine Schraubstellen vorhanden sind, der schnelle Aufbau und daß bei einer Veränderung der Fachhöhenteilung nur das betroffene Lagerfach geräumt werden muss, alle anderen Lagerfächer können belegt bleiben.

Weitere Vorteile in Kurzfassung:
Ankippen der Kragarmspitzen auf 10° begrenzt.
Keine Ständer-Schwächung durch Lochung des Ständers.
Umkippen durch einseitige Fehlbenutzung ausgeschlossen.
Austauschbarkeit der Kragarme mit Regalen anderer Abmessungen.
Bei Beschädigung leichtes Auswechseln des Langloch-C-Profiles.
Einhaltung der Unfall-Verhütungs-Vorschriften.
Lange Lebensdauer.

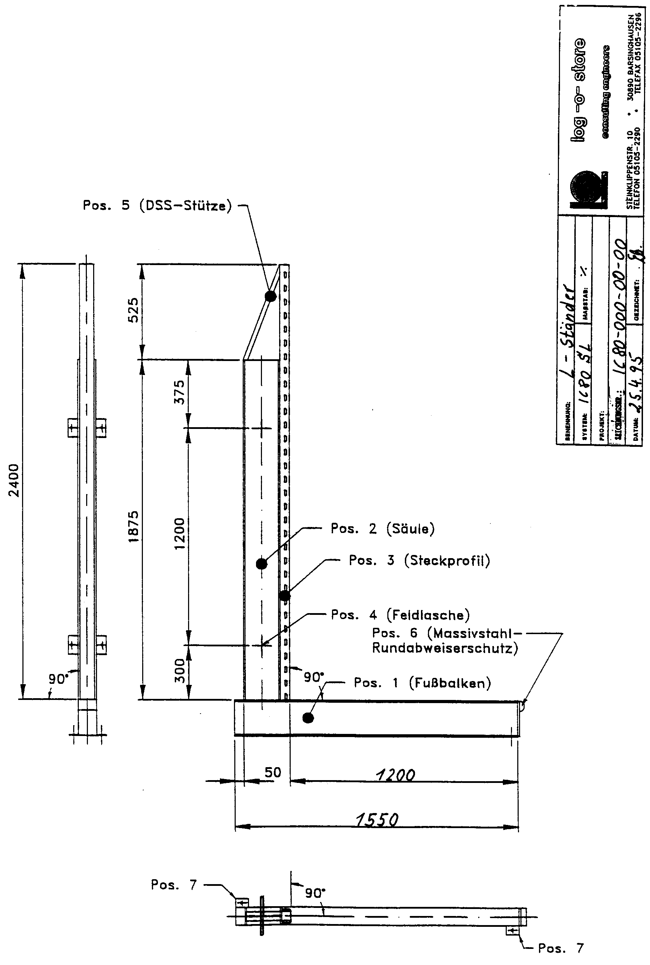

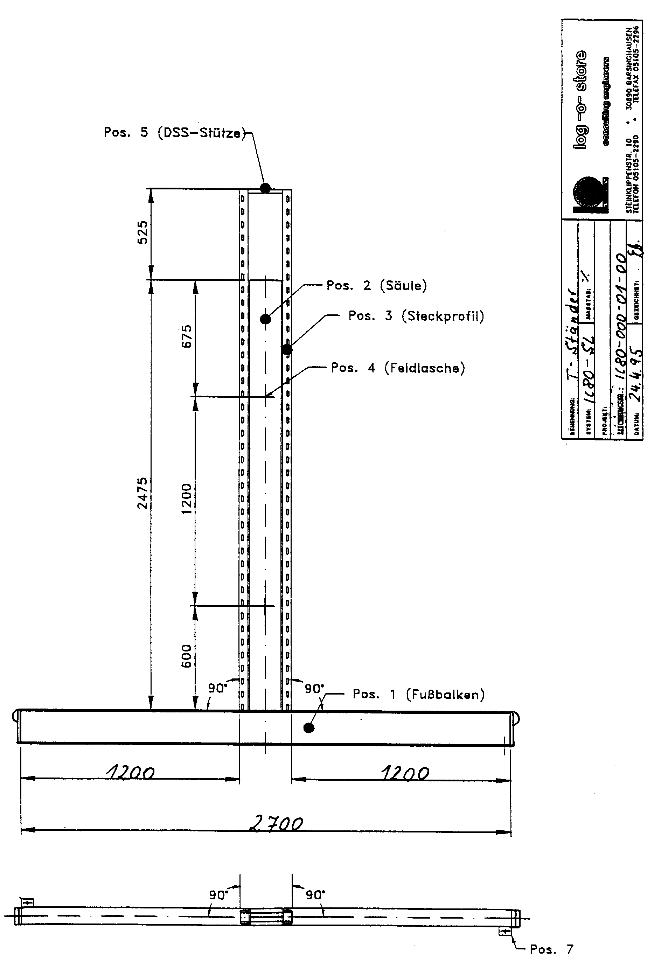

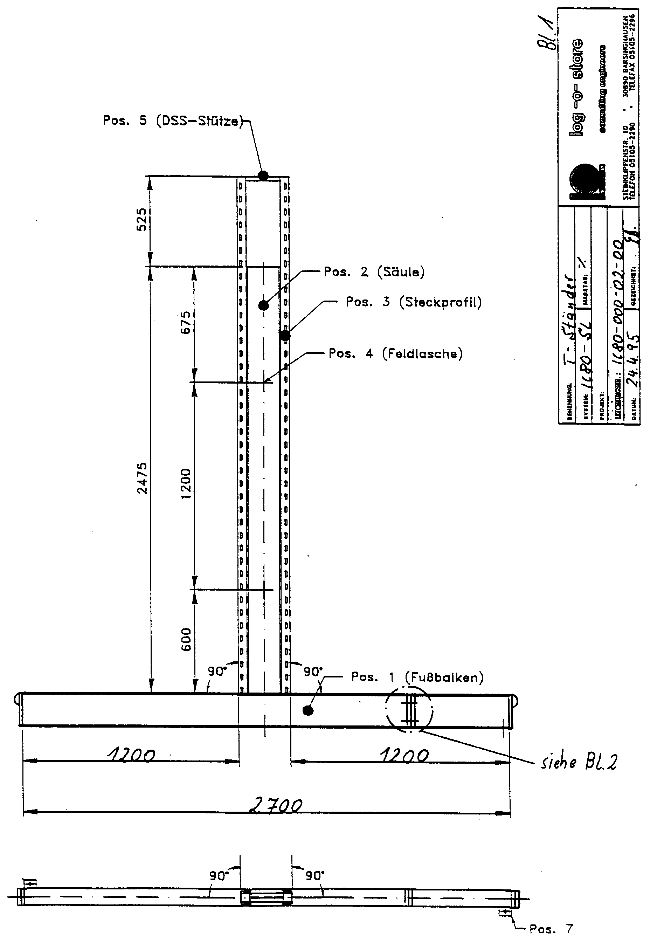

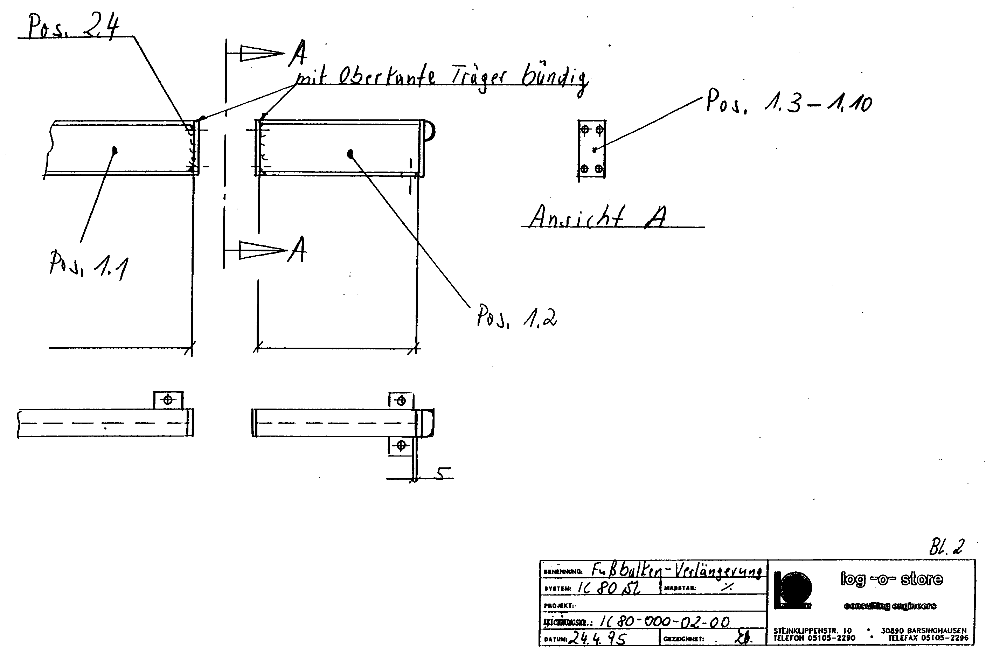

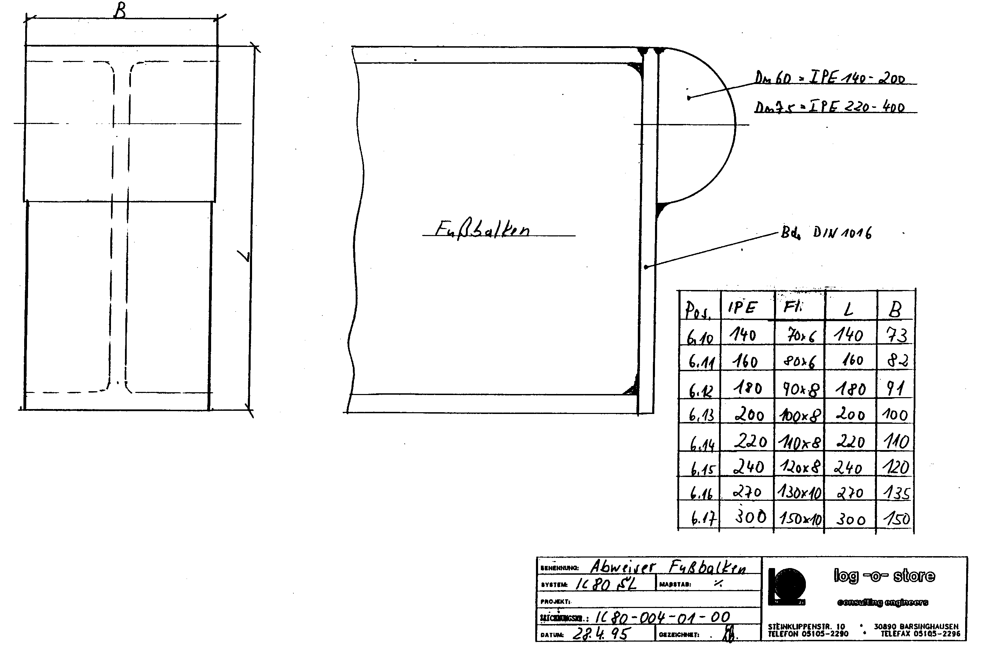

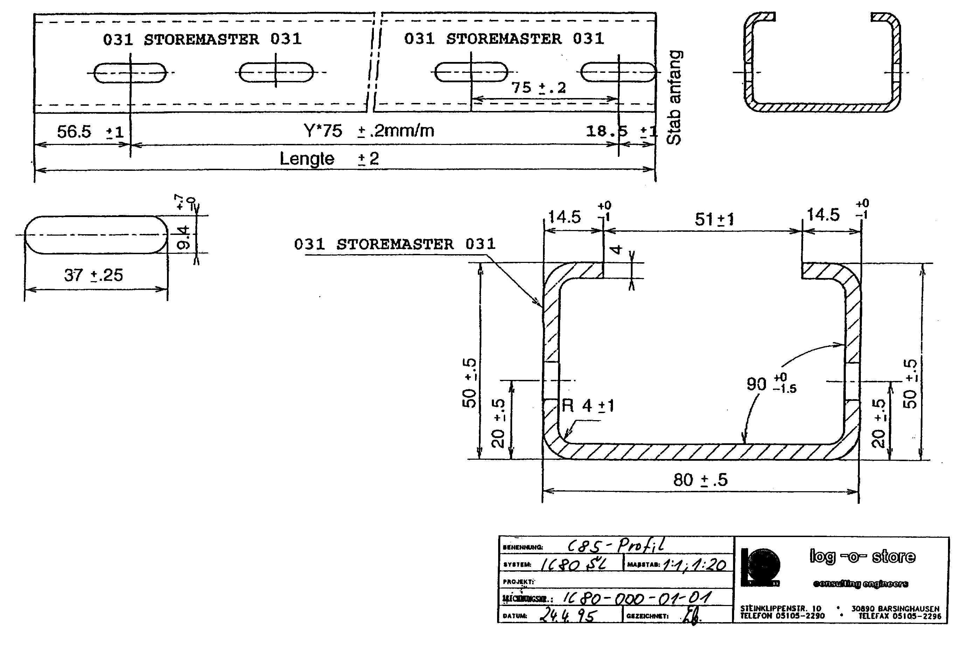

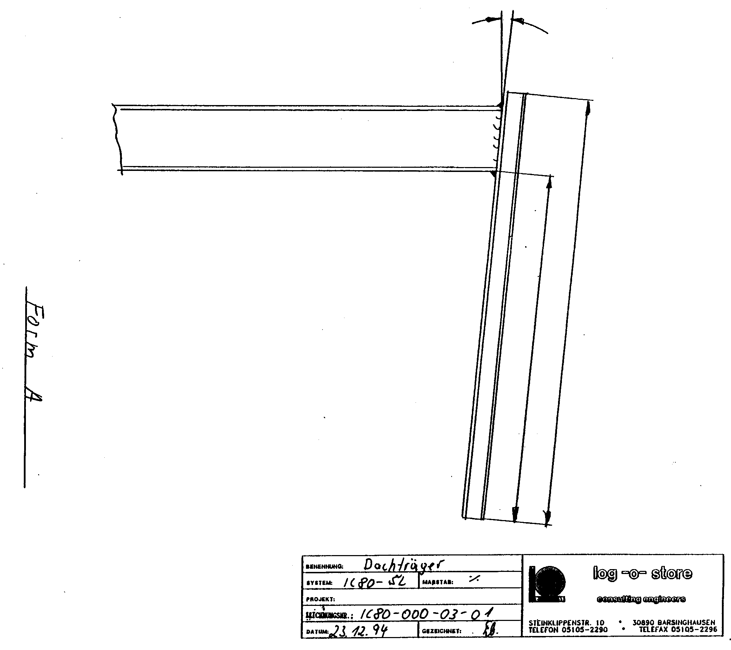

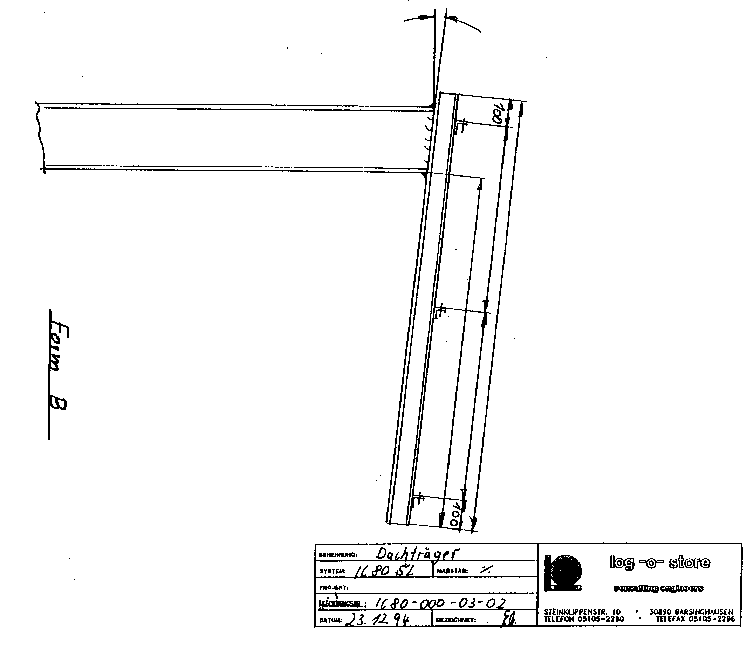

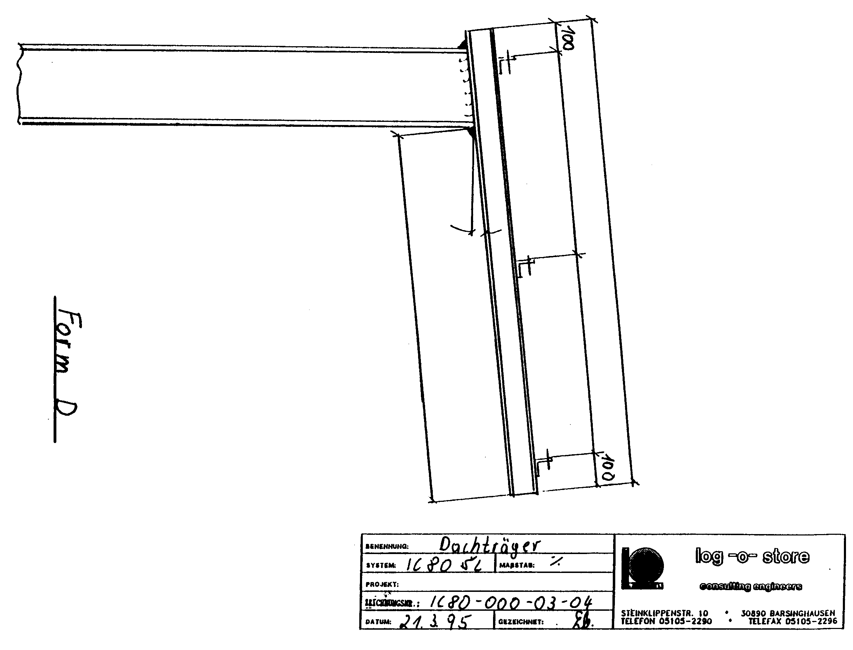

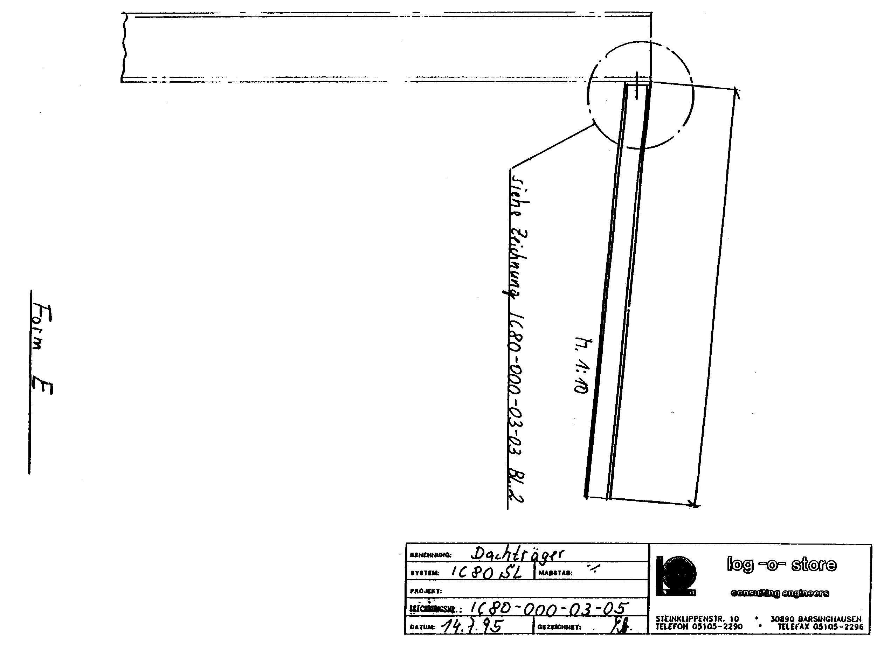

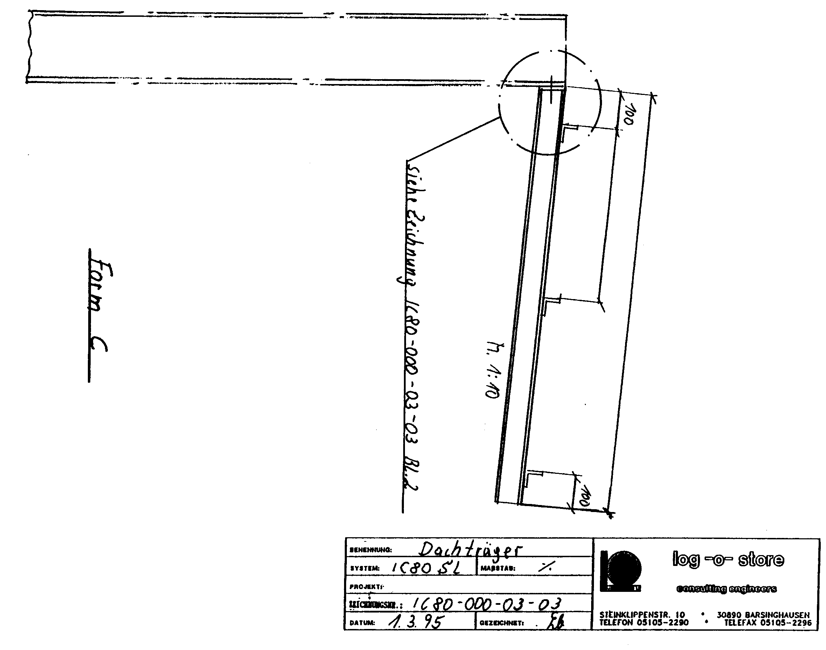

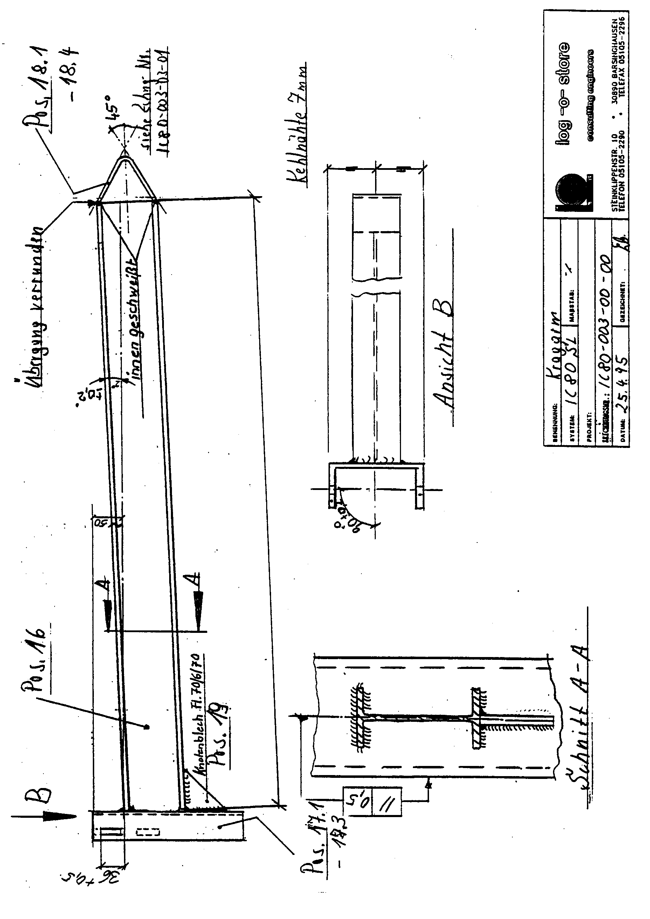

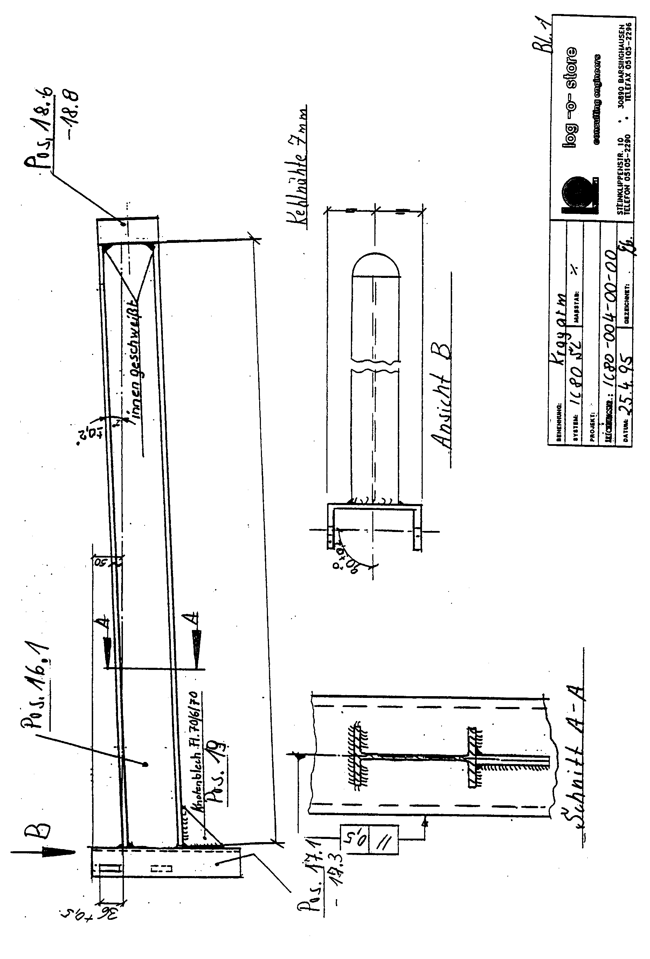

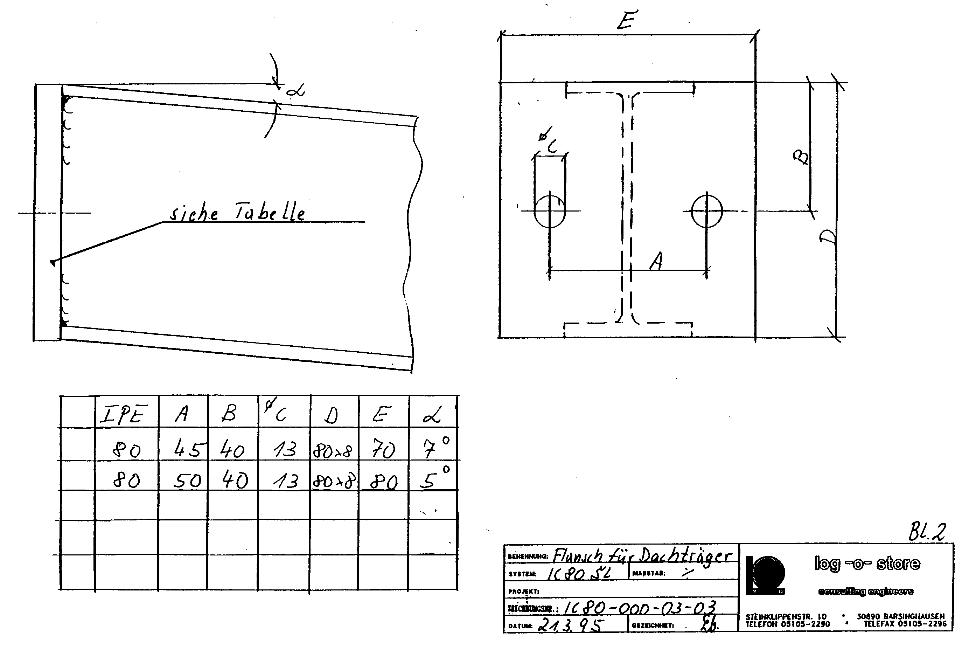

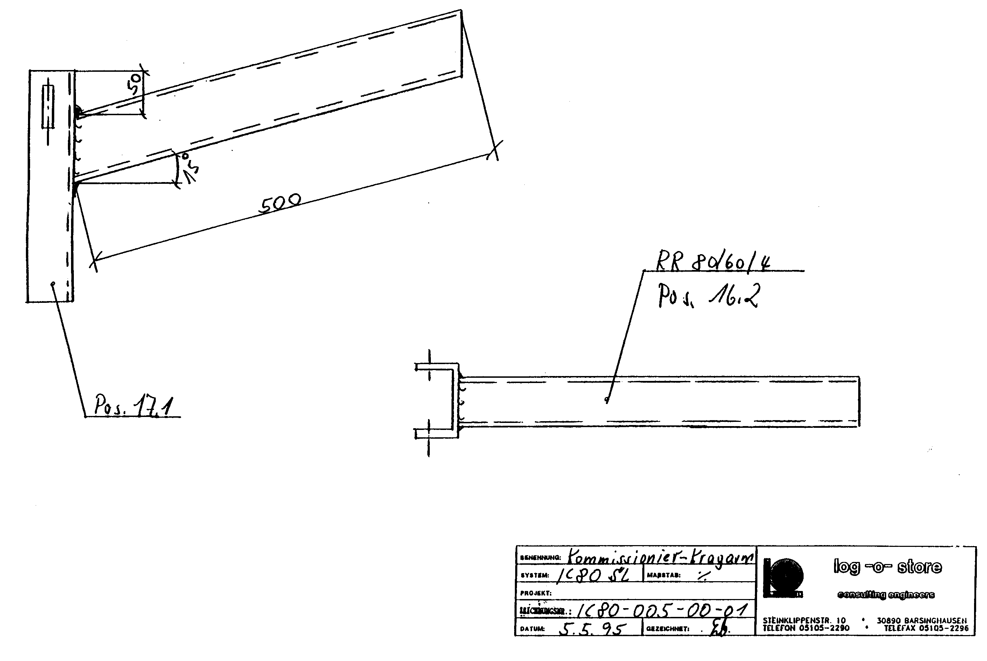

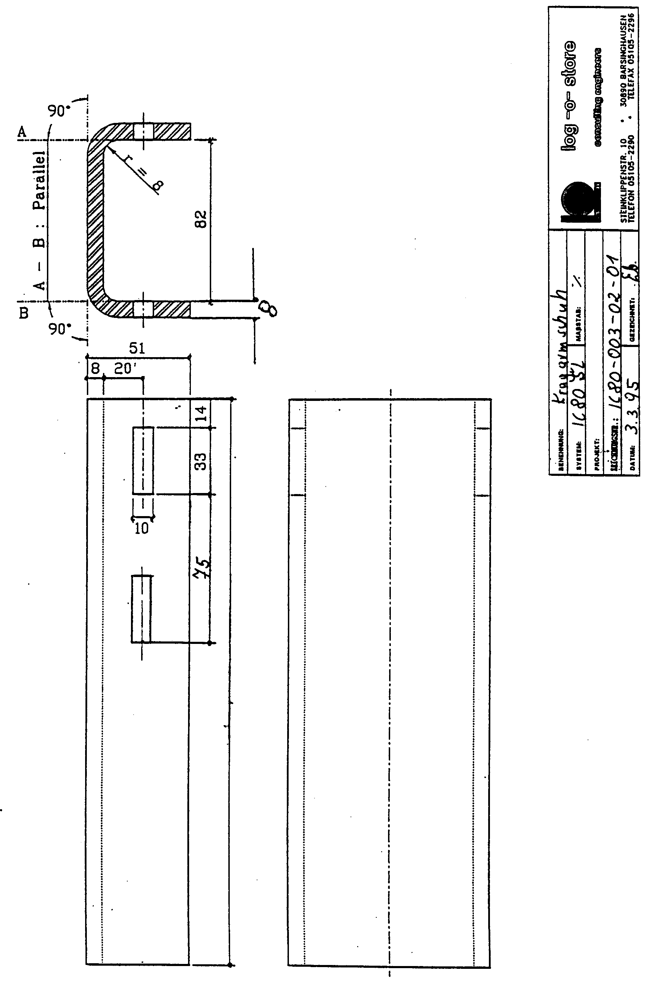

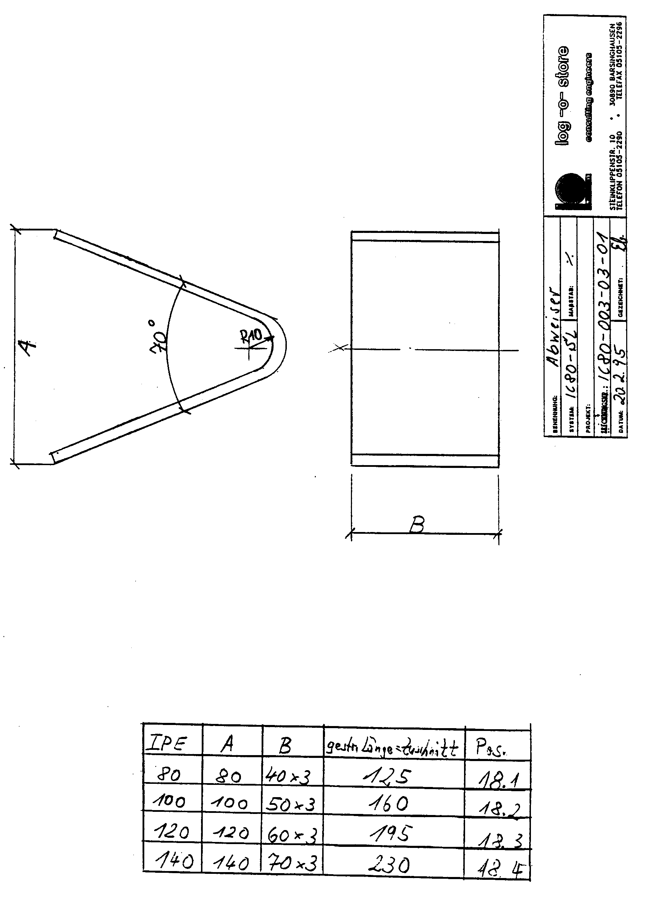

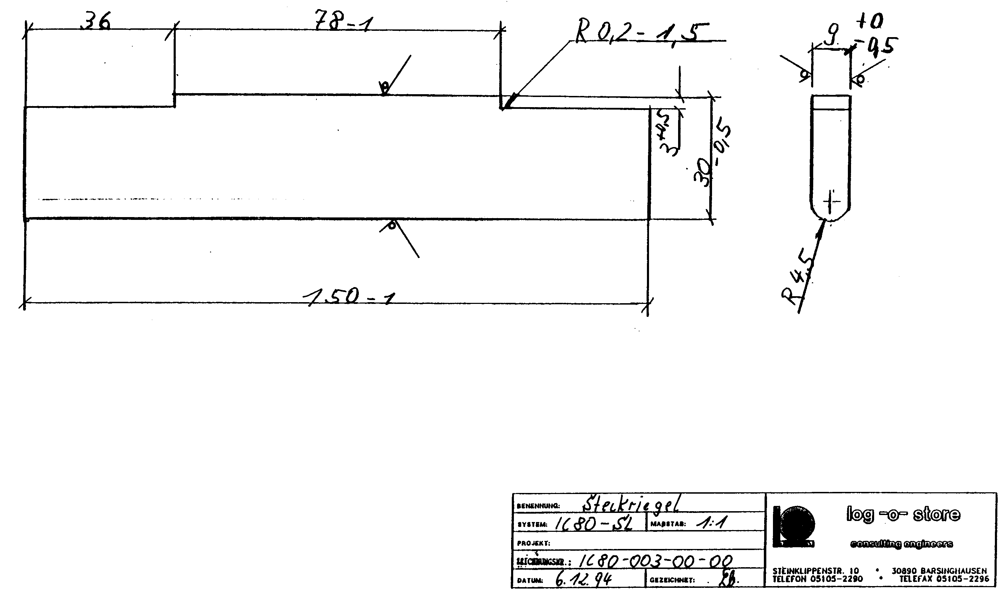

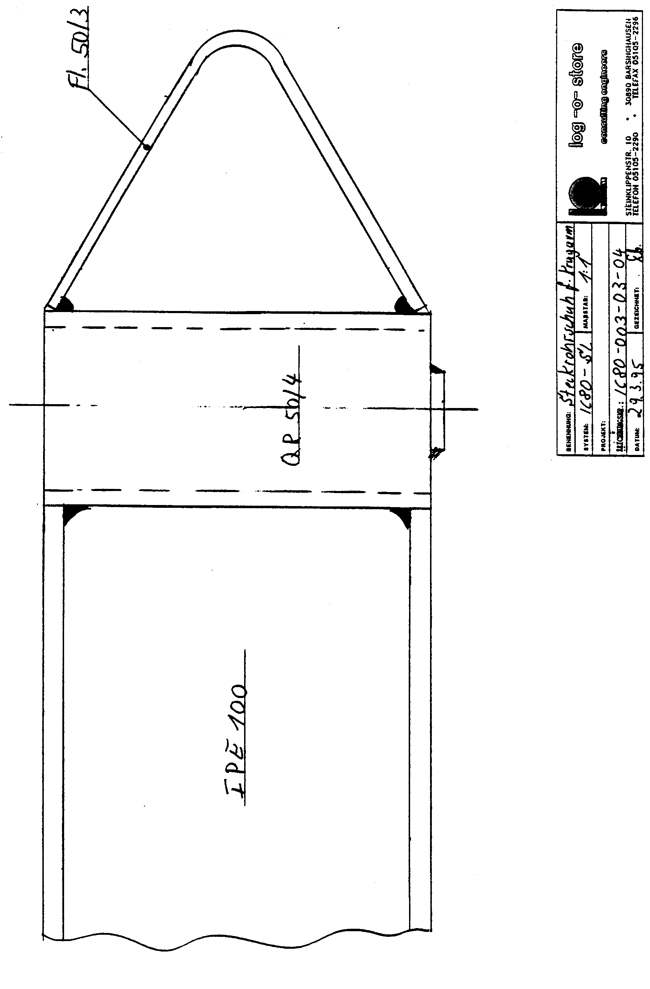

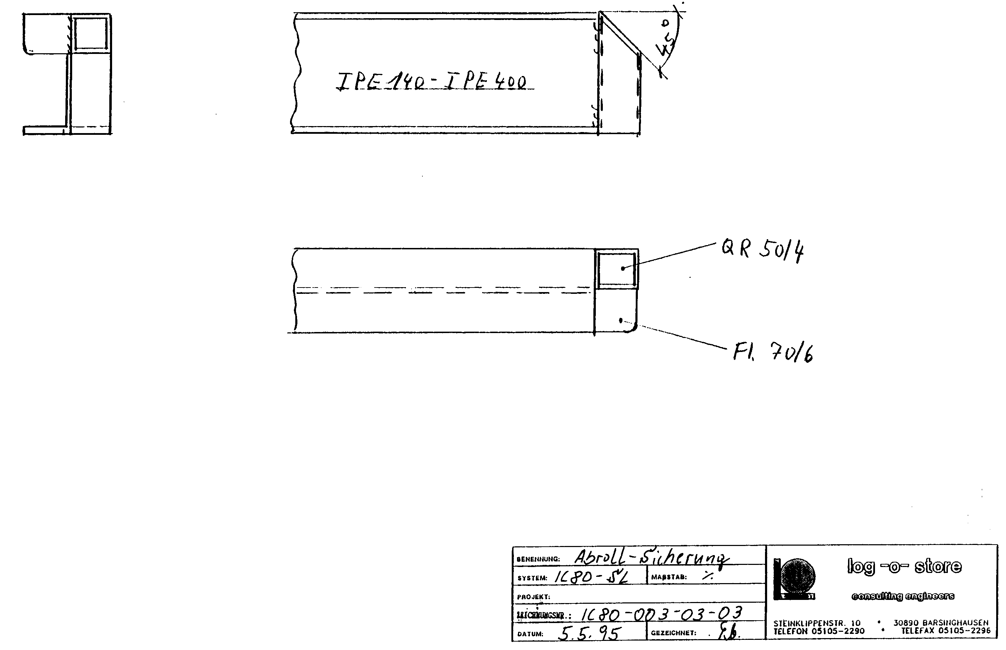

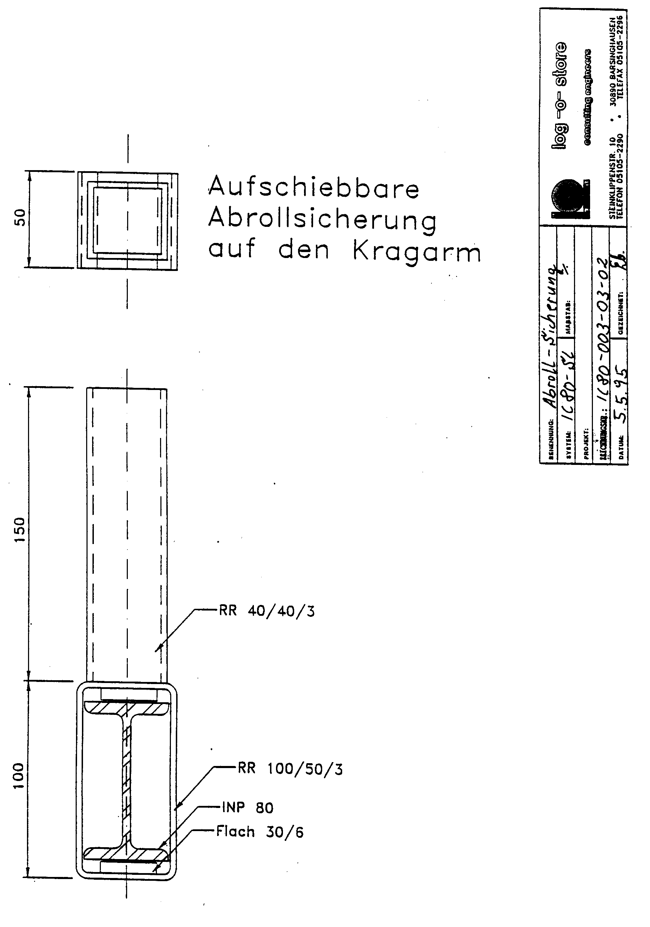

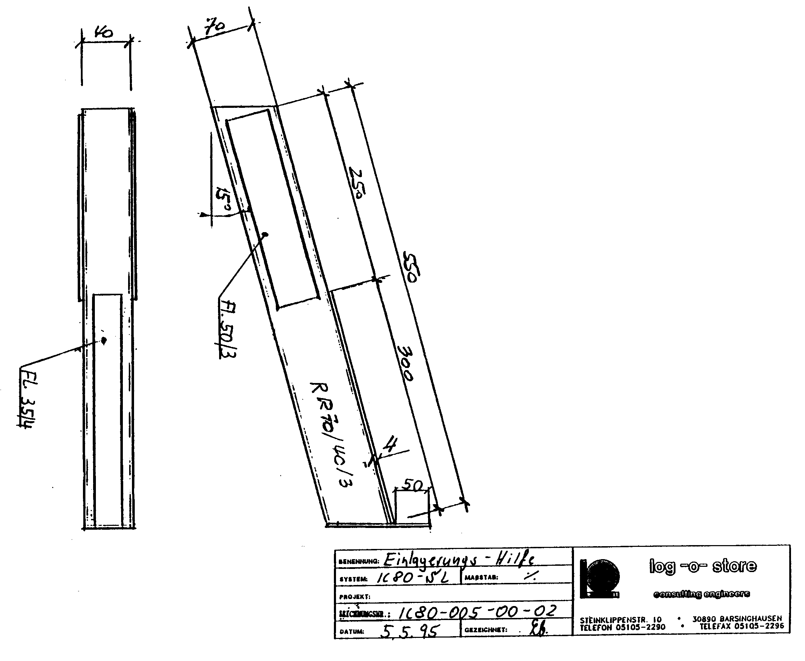

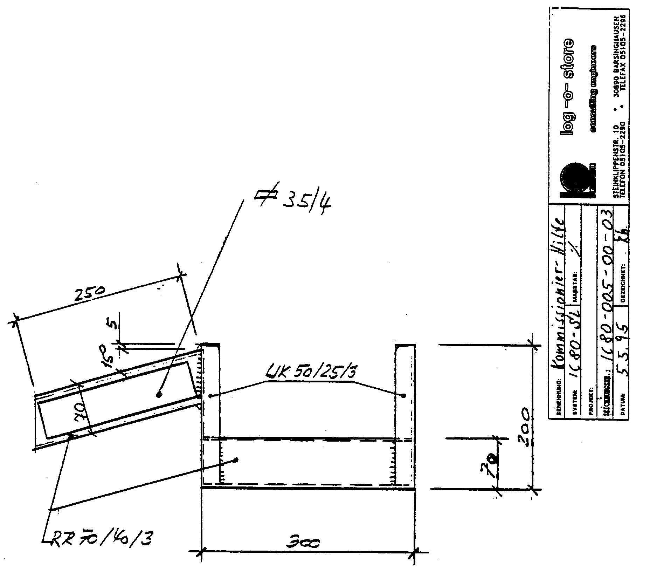

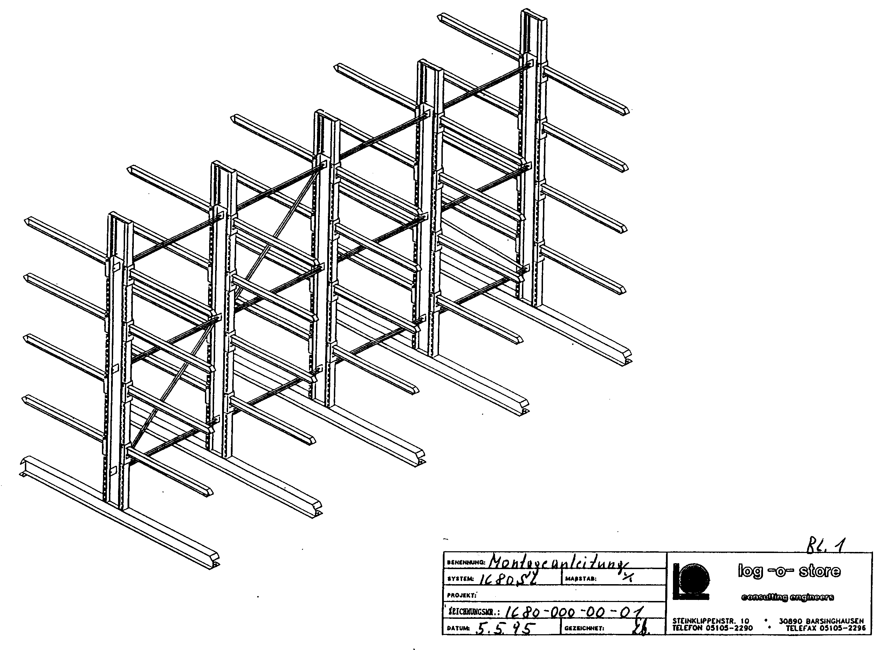

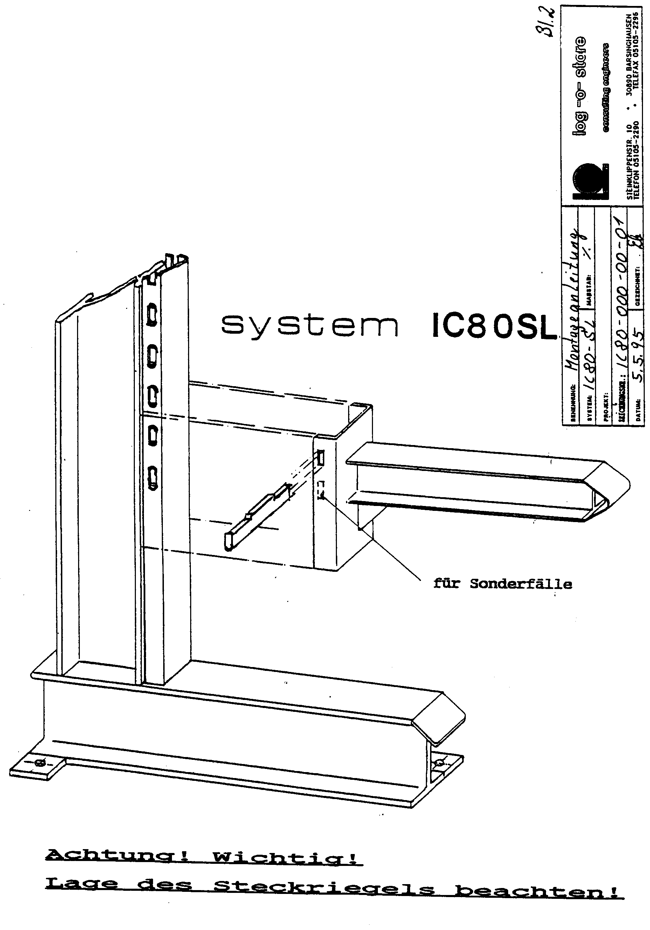

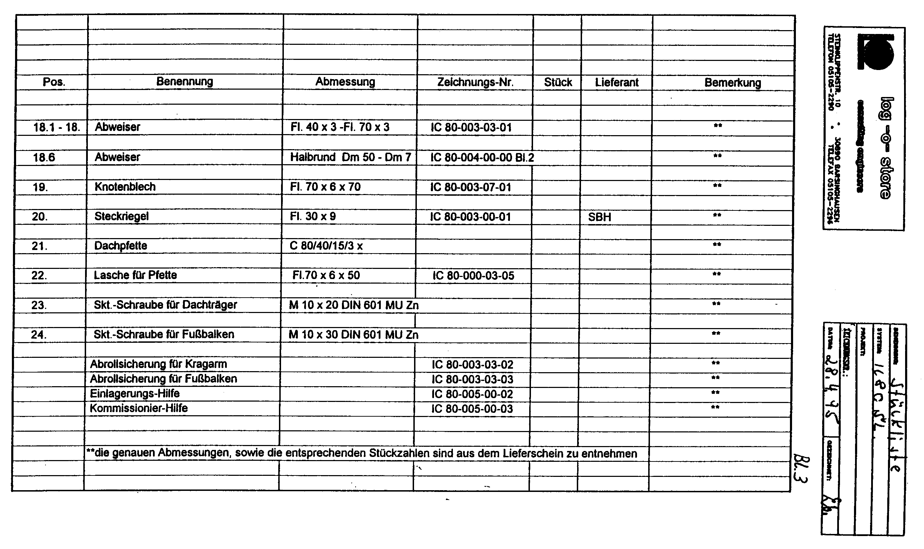

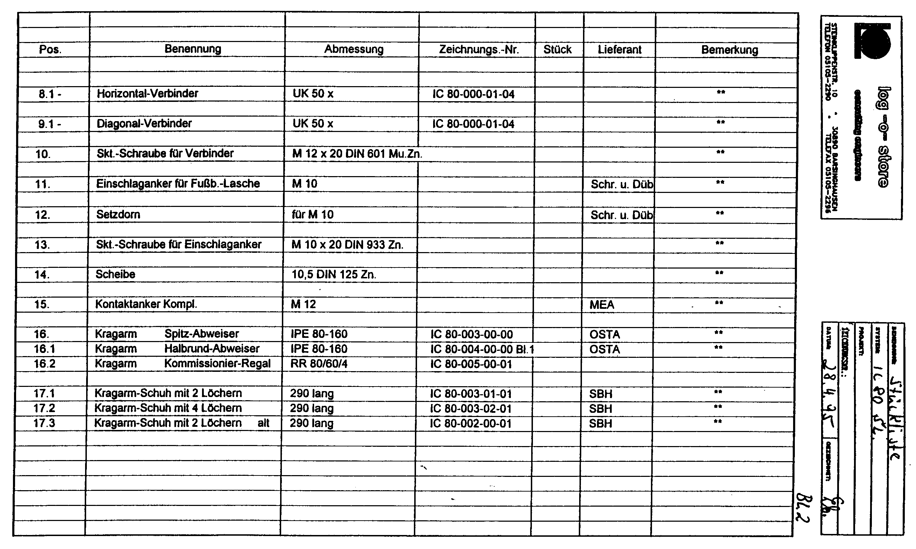

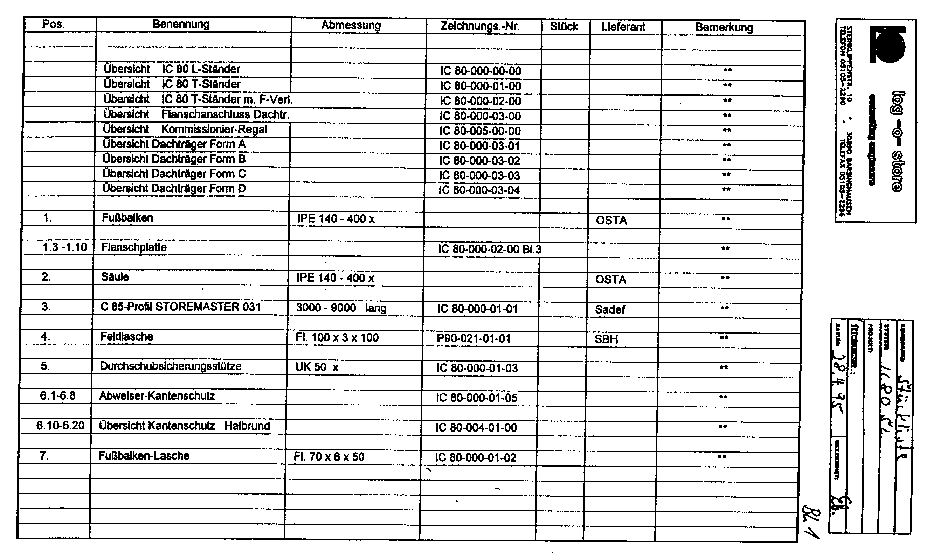

## Patentansprüche

1. Im folgenden wird ein Beispiel der Erfindung mit Bezug auf die beiliegenden Zeichnungen näher erläutert.
In Zeichnung IC 80-000-00-00 ist die Doppel-T-Trägerprofil-Standsäule (Pos. 2) sowie das daran geschweißte C85-Lochraster-Profil ( Pos. 3) und der an Pos. 2+3 geschweißte Fußbalken (Pos. 1) dargestellt. Die Fußbalken-Laschen (Pos. 7) dienen der Befestigung der Ständer auf dem Fußboden. Pos.6.1-6.8 u.6.10-6.20 sind Fußbalken-Abweiser, die eine Beschädigung der Reifen des Gabelstaplers beim Einfahren zwischen den Regalständern verhindern (siehe hierzu Zeichnung IC 80-000-01-05 u. IC 80-004-01-00). Pos. 5 (siehe Zeichnung IC 80-000-01-03) dient als Durchschub-Sicherungs-Stütze (DSS) und verhindert ein Durchschieben des Lagergutes über den Ständer hinaus.
Die Feldlaschen (Pos. 4) dienen in Verbindung mit den Horizontal- und Vertikal-Verbindern Pos.8.1-9.1 (siehe Zchng. IC 80-000-01-04) für die Bestimmung der Feldabstände der Regalständer. Diese werden mittels Schrauben M12 x 20 DIN 601 (Pos. 10 der Stückliste) miteinander verschraubt.
In Zeichnung IC 80-000-01-00 ist die Doppel-T-Trägerprofil-Standsäule (Pos. 2) sowie das beidseitig daran geschweißte C85-Lochraster-Profil ( Pos. 3) und der an Pos. 2+3 geschweißte beidseitige Fußbalken (Pos. 1) dargestellt. Weitere Beschreibungen wie oben aufgeführt.
In Zeichnung IC 80-000-01-00 ist die Doppel-T-Trägerprofil-Standsäule (Pos. 2) sowie das beidseitig daran geschweißte C85-Lochraster-Profil ( Pos. 3) und der an Pos. 2+3 geschweißte beidseitige , zweiteilige Fußbalken (Pos. 1.1-1.2) dargestellt. Die Teilung des Fußbalken dient der besseren Transportmöglichkeit. Bei der Montage werden beide Teile mittels Schrauben M 12 x 30 DIN 601 (Pos.24 der Stückliste) miteinander verschraubt. Weitere Beschreibungen wie oben aufgeführt.
In Zeichnung IC 80-000-03-00 ist die Möglichkeit des Schraub-Anschlusses eines Dachträgers dargestellt.
Die Zeichnungen IC 80-000-03-01; IC 80-000-03-03; IC 80-000-03-04; IC 80-000-03-02 zeigen die verschiedenen Möglichkeiten der Dachträger-Gestaltung, sowie Anschluss an die Standsäule.
In Zeichnung IC 80-003-03-03 ist die Möglichkeit den Fußbalken mit einer zusätzlichen Abrollsicherung für das Lagergut zu versehen dargestellt. In das QR 50/4 wird dann ein QR 40/2 x 300 mm eingesteckt.
Die Kragarme (siehe Zeichnungen IC 80-003-00-00,IC 80-004-00-00), auf denen das Lagergut abgelegt wird, bestehen aus einem Doppel-Träger- Profil (je nach Belastung IPE 80-160), einem Kragarmschuh (Pos. 17.1-17.3), einem Kantenschutz-Abweiser (Pos. 18.6-18.8) und einem Knotenblech (Pos. 19). Alle Teile sind miteinander verschweißt.
Als weitere Variante kann ein Steckrohrschuh zwischen dem Doppel-Träger-Profil und dem Kantenschutz-Abweiser geschweißt werden, hier wird dann ein QR 40/2 x 300 mm als Abrollsicherung eingesetzt.
Der Kragarm (siehe Zeichnung IC 80-005-00-01) besteht aus einem RR 80/60/4 (Pos. 16.2) und den daran geschweißten Kragarmschuh (Pos. 17.1). Er dient hauptsächlich zur Lagerung von Stabmaterial.
Für Belastungen bis ca. 1000 Kg je Kragarm wird der Kragarmschuh mit 2 Löchern nach Zeichnung IC 80-003-01-01 eingesetzt, für Belastungen bis ca. 2000 Kg je Kragarm der Kragarmschuh mit 4 Löchern nach Zeichnung IC 80-003-02-01.
Als zusätzliche Option kann auf dem Kragarm eine Abrollsicherung nach Zeichnung IC 80-003-03-02 aufgeschoben werden.
Die Kommissionier-Hilfe (siehe Zeichnung IC 80-005-00-03), sowie die Einlagerungs-Hilfe (siehe Zeichnung IC 80-005-00-02) sind ebenfalls als zusätzliche Option vorgesehen und können in den Kragarm (siehe Zeichnung IC 80-005-00-01) eingesteckt werden.
Der Sicherheits-Steckriegel (siehe Zeichnung IC 80-003-00-00) verbindet die Kragarme mit der Standsäule.
In der Montageanleitung (siehe Zeichnung IC 80-000-00-01) ist die Lage des Sicherheits-Steckriegel (siehe Zeichnung IC 80-003-00-00) dargestellt.
